Europäisches Patentamt

European Patent Office

Office européen des brevets

(19)

(11) Veröffentlichungsnummer: **0 394 760**
**A1**

(12) **EUROPÄISCHE PATENTANMELDUNG**

(21) Anmeldenummer: **90106980.7**

(22) Anmeldetag: **11.04.90**

(51) Int. Cl.⁵: **C08G 18/77, C08G 18/71,**
**C09D 175/04, C09K 3/10**

(30) Priorität: **24.04.89 DE 3913405**

(43) Veröffentlichungstag der Anmeldung:
**31.10.90 Patentblatt 90/44**

(84) Benannte Vertragsstaaten:
**AT BE CH DE ES FR GB IT LI NL**

(71) Anmelder: **BAYER AG**

**D-5090 Leverkusen 1 Bayerwerk(DE)**

(72) Erfinder: **Schmalstieg, Lutz, Dr.**
**Balthasarstrasse 14**
**D-5000 Köln 1(DE)**
Erfinder: **Hentschel, Karl-Heinz, Dr.**
**Friedrich Offermann-Strasse 57c**
**D-5060 Bergisch Gladbach 1(DE)**
Erfinder: **Nachtkamp, Klaus, Dr.**
**Silcherstrasse 13**
**D-4000 Düsseldorf 13(DE)**
Erfinder: **Pedain, Josef, Dr.**
**Haferkamp 6**
**D-5000 Köln 80(DE)**

(54) **Zweikomponenten-Bindemittel und ihre Verwendung zur Herstellung von Beschichtungen und Abdichtungen.**

(57) Ein Zweikomponenten-Bindemittel für Beschichtungs- und Dichtmassen, bestehend aus bestimmten Estergruppen aufweisenden Polyisocyanaten und einer Reaktivkomponente, bestehend aus mindestens einer Verbindung mit mindestens zwei, gegebenenfalls reversibel blockierten, gegenüber Isocyanatgruppen reaktionsfähigen Gruppen und die Verwendung der Bindemittel zur Herstellung von Beschichtungen und Abdichtungen.

EP 0 394 760 A1

# Zweikomponenten-Bindemittel und ihre Verwendung zur Herstellung von Beschichtungen und Abdichtungen

Die vorliegende Erfindung betrifft neuartige, lösungsmittelarm oder -frei applizierbare Bindemittel für Dichtungs- und Beschichtungsmassen auf Basis von speziellen, Isocyanatgruppen aufweisenden Prepolymeren und Verbindungen mit gegenüber Isocyanatgruppen reaktionsfähigen Gruppen oder in solche Gruppen überführbaren Gruppen.

Bindemittel, bestehend aus Isocyanat-Prepolymeren und (potentiell) gegenüber Isocyanaten reaktiven Verbindungen sind in großer Fülle bekannte. So beschreibt z.B. die DE-OS 1 520 139 ein Verfahren zur Herstellung von feuchtigkeitshärtenden Mischungen aus Polyisocyanaten und Polyketiminen oder Polyaldiminen, wobei als Polyisocyanate vorzugsweise Isocyanat-Prepolymere (NCO-Prepolymere) verwendet werden. Die DE-AS 1 240 654 beschreibt ein Verfahren zur Herstellung von vernetzten Kunststoffen aus NCO-Prepolymeren und speziellen aromatischen Diaminen. Die DE-OS 2 018 233 beschreibt durch Feuchtig keit härtbare Zubereitungen aus Isocyanatgruppen aufweisenden Verbindungen und Polyoxazolidinen.

Allen Veröffentlichungen des Standes der Technik ist gemeinsam, daß die verwendeten NCO-Prepolymere solche der aus der Polyurethanchemie bekannten Art sind, wie sie durch Reaktion von höhermolekularen Polyhydroxylverbindungen wie z.B. Polyether- oder Polyester-Polyolen mit überschüssigen Mengen Di- oder Polyisocyanat hergestellt werden. In der Regel enthalten die Reaktionsprodukte zunächst größere Anteile monomerer Di- oder Polyisocyanate. Diese müssen oft mit Rücksicht auf den Anwender, also aus arbeitshygienischen Gründen entfernt werden, was z.B. durch Dünnschichtdestillation gelingt.

Die dabei erhaltenen monomerenfreien NCO-Prepolymere haben stets wesentlich höhere Viskositäten als die Ausgangsverbindungen. Daher können solche Prepolymere vielfach nur unter Zusatz von organischen Lösungsmitteln oder Weichmachern zur Herstellung von Lacken oder Beschichtungsstoffen eingesetzt werden.

Die Verwendung von Lösungsmitteln ist aber bekanntlich unter ökologischen Gesichtspunkten von Nachteil. Gesetzgeberische Auflagen fordern den Einsatz möglichst lösungsmittelarmer Beschichtungssysteme. Auch der Einsatz von Weichmachern ist mit Nachteilen verbunden. Weichmacher verbleiben in den Beschichtungen, können die mechanischen Eigenschaften der Polymere verschlechtern, die Haftung zum Substrat beeinträchtigen und schließlich auf lange Sicht aus den Beschichtungen auswandern.

Die der Erfindung zugrundeliegende Aufgabe bestand daher darin, neue Zweikomponenten-Bindemittel auf Basis von NCO-Prepolymeren und (potentiell) gegenüber Isocyanatgruppen reaktionsfähigen Verbindungen zur Verfügung zu stellen, die wesentlich niedrigere Viskositäten aufweisen als vergleichbare Bindemittel des Standes der Technik, so daß eine Verarbeitung unter Verringerung des Lösungsmittelanteils oder sogar gänzlich ohne Lösungsmittel oder Weichmacher ermöglicht wird.

Diese Aufgabe konnte gelöst werden durch die Bereitstellung der nachstehend naher beschriebenen erfindungsgemäßen Bindemittel, deren Polyisocyanat-Komponente aus bestimmten Estergruppen aufweisenden NCO-Prepolymeren besteht.

Die DE-OS 2 120 090 beschreibt bereits NCO-Prepolymere, die konstitutionell den NCO-Prepolymeren, wie sie erfindungsgemäß als Polyisocyanat-Komponente eingesetzt werden, vergleichbar sind. Die NCO-Prepolymeren werden jedoch entsprechend der Lehre der genannten Vorveröffentlichung zur Ausrüstung von Keratinfasern enthaltenden Textilien verwendet, für welchen Einsatzzweck die NCO-Prepolymeren in Form von stark verdünnten organischen Lösungen oder von wäßrigen Emulsionen zur Anwendung gelangen. Der genannten Vorveröffentlichung ist daher kein Hinweis auf eine besondere Eignung der NCO-Prepolymeren zur Herstellung lösungsmittelarmer oder -freier Beschichtungsmittel zu entnehmen. Insbesondere fehlt jeglicher Hinweis auf die erfindungsgemäß besonders gut geeigneten NCO-Prepolymeren, die nach einem speziellen, nachstehend näher beschriebenen Verfahren hergestellt werden.

Gegenstand der Erfindung sind Zweikomponenten-Bindemittel für Beschichtungs- und Dichtmassen bestehend aus

    a) einer Polyisocyanat-Komponente und

    b) einer Reaktivkomponente, bestehend aus mindestens einer Verbindung mit mindestens zwei, gegebenenfalls reversibel blockierten, gegenüber Isocyanatgruppen reaktionsfähigen Gruppen in, einem Äquivalentverhältnis von Isocyanatgruppen zu freien und blockierten, gegenüber Isocyanatgruppen reaktionsfähigen Gruppen von 0,8:1 bis 10:1 entsprechenden Mengen, dadurch gekennzeichnet, daß die Polyisocyanat-Komponente a) im wesentlichen aus Verbindungen der allgemeinen Formel

$$A \left[ O\text{-}CO\text{-}B\text{-}NCO \right]_n$$

besteht, wobei

n für eine ganze Zahl gleich oder größer als 2 steht,

A für einen n-wertigen organischen Rest steht, wie er durch Entfernung der Hydroxylgruppen aus einer n-wertigen organischen Polyhydroxylverbindung des Molekulargewichtsbereichs 400 bis 20.000, die, von den Hydroxylgruppen abgesehen, bei Raumtemperatur gegenüber Isocyanatgruppen inert ist, erhalten wird, und
B für einen aliphatischen, cycloaliphatischen oder aromatischen Kohlenwasserstoffrest steht, der gegebenenfalls gegenüber den in den Bindemitteln vorliegenden reaktiven Gruppen inerte Substituenten aufweist.

Gegenstand der Erfindung ist auch die Verwendung dieser Zweikomponenten-Bindemittel, gegebenenfalls in Kombination mit in der Lacktechnologie üblichen Hilfs- und Zusatzmitteln, zur Herstellung von Beschichtungen und Abdichtungen.

Die Polyisocyanat-Komponente a) besteht im wesentlichen aus Verbindungen der allgemeinen Formel

$$A\text{---}[\text{O-CO-B-NCO}]_n$$

für welche
n, A und B die bereits genannte Bedeutung haben. Vorzugsweise werden solche NCO-Prepolymeren der genannten allgemeinen Formel eingesetzt, für welche
n eine ganze Zahl von 2 bis 8, insbesondere 2 bis 4, bedeutet,
A für einen n-wertigen Rest steht, wie er durch Entfernung der Hydroxylgruppen aus einer Ether-, Ester-, Carbonat- und/oder Urethangruppen aufweisenden Polyhydroxylverbindung des Molekulargewichtsbereichs 800 bis 5.000 erhalten wird, und
B für einen aliphatischen Kohlenwasserstoffrest mit 2 bis 10 Kohlenstoffatomen, vorzugsweise 4 bis 8 Kohlenstoffatomen oder einen cycloaliphatischen Kohlenwasserstoffrest mit 6 Kohlenstoffatomen steht, mit der Maßgabe, daß zwischen der Carbonylgruppe und der Isocyanatgruppe mindestens 2 Kohlenstoffatome angeordnet sind.

Die Herstellung der NCO-Prepolymeren der genannten allgemeinen Formel erfolgt durch eine geeignete Modifizierung von organischen Polyhydroxylverbindungen der allgemeinen Formel
$$A(OH)_n.$$

Diese Modifizierung kann beispielsweise in einer Umsetzung der mehrwertigen Alkohole mit Isocyanatocarbonsäurechloriden der allgemeinen Formel
$$Cl\text{-}CO\text{-}B\text{-}NCO$$
entsprechend der Lehre der DE-OS 2 120 090 bestehen.

Vorzgusweise erfolgt die Überführung der genannten mehrwertigen Polyhydroxylverbindungen in die erfindungsgemäß als Komponente a) eingesetzten NCO-Prepolymeren in Analogie zu dem in DE-OS 3 634 248 beschriebenen Verfahren.

Hierzu erfolgt in einer ersten Reaktionsstufe die Überführung der Polyhydroxylverbindungen in die entsprechenden O-silylierten Verbindungen der Formel

$$A[\text{OSiR}_3]_n$$

in Analogie zu der von M. Lalonde und C.H. Chan in "Synthesis" 1985, Seiten 817 bis 845, beschriebenen Verfahrensweise. Hierzu werden die Polyhydroxylverbindungen beispielsweise mit Chlorsilanen oder Disilazanen der allgemeinen Formeln
$$R_3SiCl \text{ bzw. } R_3Si\text{-}NH\text{-}SiR_3,$$
gegebenenfalls unter Mitverwendung eines Hilfslösungsmittels umgesetzt. Die Umsetzung mit einem Chlorsilan erfolgt im allgemeinen unter Einhaltung eines Molverhältnisses von Hydroxylgruppen zur Chlorsilan von 1:1 bis 1:2 bei Temperaturen zwischen 0 und 80°C. Die Reaktion erfordert in der Regel den Zusatz einer mindestens äquimolaren Menge einer organischen Base z.B. Pyridin oder Triethylamin zum Binden des entstehenden Chlorwasserstoffs. Die Umsetzung mit Disilazanen erfolgt vorzugsweise unter Einhaltung eines Molverhältnisses von Hydroxylgruppen zur Disilazan von 1:0,5 bis 1:1 bei Temperaturen zwischen 60°C und 140°C bis die Abspaltung von Ammoniak zum Abschluß gekommen ist. Oftmals empfiehlt sich die Mitverwendung einer geringen Menge eines sauren Katalysators, wie beispielsweise p-Toluolsulfonsäure oder Trimethylchlorsilan.

Für diese Umsetzung geeignete Lösungsmittel, die gegebenenfalls mitverwendet werden, sind beispielsweise n-Hexan, Cyclohexan, Toluol, Xylol, Methoxypropylacetat, Ethylacetat, Butylacetat, Methylethylketon oder Gemische derartiger Lösungsmittel. Für die Umsetzung geeignete Chlorsilane bzw. Disilazane sind insbesondere solche der obengenannten Formeln, für welche R für einen Alkylrest mit 1 bis 4 Kohlenstoffatomen oder einen Phenylrest, vorzugsweise für eine Methylgruppe steht.

Die O-silylierten Polyhydroxylverbindungen werden anschließend durch Umsetzung mit Isocyanatocarbonsäurechloriden der genannten allgemeinen Formel, für welche B die bereits genannte Bedeutung bzw. die bereits genannte bevorzugte Bedeutung hat, zur Reaktion gebracht. Hierbei wird die Menge der Reaktionspartner im allgemeinen so gewählt, daß auf jedes Mol Chlorcarbonylgruppe 0,8 bis 1,2 Mol silylierte Hydroxylgruppe entfallen.

Vorzugsweise wird unter Einhaltung von äquimolaren Mengen der Einsatzstoffe gearbeitet. Die Umsetzung der silylierten Hydroxylverbindungen mit Isocyanatosäurechloriden erfolgt im allgemeinen im Temperaturbereich von 50 bis 150°C, gegebenenfalls unter Zusatz der für diese Reaktion bekannten Katalysatoren wie z.B. Chinolin oder Pyridin.

Als Nebenprodukt der erfindungsgemäßen Umsetzung entsteht ein Trialkyl- oder Triarylchlorsilan, das sich destillativ bequem aus dem Reaktionsgemisch entfernen läßt.

Auch diese Umsetzung kann in An- und Abwesenheit eines Lösungsmittels der bereits oben beispielhaft genannten Art durchgeführt werden. Auf die Mitverwendung von Lösungsmitteln kann im allgemeinen verzichtet werden, wenn die eingesetzten silylierten Hydroxylverbindungen eine zur Durchführung des erfindungsgemäßen Verfahrens ausreichend niedrige Viskosität aufweisen.

Entsprechend der Aufgabenstellung der vorliegenden Erfindung, möglichst lösungsmittelarme Bindemittel zur Verfügung zu stellen, ist die Verfahrensweise unter Mitverwendung von Lösungsmitteln weniger bevorzugt. Die Entfernung von Resten flüchtiger Bestandteile aus den Prepolymeren kann durch Dünnschichtdestillation erfolgen.

Für die Herstellung der Polyisocyanat-Komponente a) geeignete Hydroxylverbindungen sind beliebige, mindestens zweiwertige organische Polyhydroxylverbindungen des Molekulargewichtsbereichs 400 bis 20.000, die, von den Hydroxylgruppen abgesehen, bei Raumtemperatur gegenüber Isocyanatgruppen inert sind, so daß die NCO-Prepolymeren bei Raumtemperatur lagerstabile Verbindungen darstellen. Vorzugsweise handelt es sich bei den Polyhydroxylverbindungen A(OH)$_n$ um Ether-, Ester-, Carbonat- und/oder Urethangruppen aufweisende Polyhydroxylverbindungen des Molekulargewichtsbereichs 800 bis 5.000. Die genannten Molekulargewichte lassen sich beispielsweise gelpermeationschromatographisch bestimmen.

Zur Herstellung der NCO-Prepolymeren a) geeignet sind beispielsweise die an sich bekannten höhermolekularen Polyole von der Art, wie sie als Rohstoffe in der Polyurethan-Chemie Verwendung finden. Vertreter solcher Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Grundsätzlich geeignet sind auch solche Polyhydroxylverbindungen, die zwei oder mehrere unterschiedliche Gruppierungen der genannten Art in sich vereinigen bzw. um Gemische von unterschiedlichen Polyhydroxylverbindungen der genannten Art. Die erfindungsgemäß in Frage kommenden Polyether-Polyole werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie BF$_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol(1,3) oder -(1,2), Trimethylolpropan, Glycerin, Sorbit, 4,4′-Dihydroxy-diphenylpropan, Anilin, Ethanolamin oder Ethylendiamin hergestellt. Auch Sucrosepolyether, wie sie z.B. in den DE-Auslegeschriften 1 176 358 und 1 063 938 beschrieben werden, sowie auf Formit oder Formose gestartete Polyether (DE-Offenlegungsschriften 2 639 083 bzw. 2 737 951), können eingesetzt werden.

Auch die in Frage kommenden Polyester-Polyole sind solche der bekannten Art und sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäuranhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage.

Auch Polyester aus Lactonen, z.B. ε-Caprolacton, oder aus Hydroxycarbonsäuren, z.B. ω-Hydroxycapronsäure, sind einsetzbar.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

Sehr gut geeignet sind auch Hydroxylgruppen aufweisende Polyester-Polycarbonate, wie sie z.B. gemäß DE-AS 1 770 245 zugänglich sind. Solche Verbindungen werden z.B. durch Reaktion von ε-Caprolacton mit Polyolen, wie z.B. Hexandiol-1,6 und anschließende Umsetzung der so erhaltenen Esterglykole mit Diphenylcarbonat hergestellt.

Die erfindungsgemäß in Frage kommenden Polyurethan-Polyole werden durch Polyaddition eines oder mehrerer der vorgenannten höhermolekularen Polyhydroxylverbindungen, gegebenenfalls im Gemisch mit niedermolekularen Polyolen, wie z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Diethylenglykol, Dipropylenglykol oder höheren Polyalkylenglykolen, mit Polyisocyanaten, wie z.B. 2,4- und 2,6-Toluylendiisocyanat sowie beliebigen Gemischen dieser Isomeren, Diphenylmethan-2,4'- und/oder -4,4'-diisocyanat, 1,6-Hexamethylendiisocyanat, Cyclohexan-1,3- und -1,4-diisocyanat sowie beliebigen Gemischen dieser Isomeren, 1-Isocyanato-3,3,5-trimethyl-5-isocyanatomethyl-cyclohexan (Isophorondiisocyanat), 4,4'-Dicyclohexylmethandiisocyanat und/oder Biuret- oder Isocyanuratgruppen aufweisenden Addukten der obengenannten Polyisocyanate hergestellt. Das Mengenverhältnis von Polyhydroxylverbindung zu Polyisocyanat wird dabei so gewählt, daß die Hydroxylgruppen in stöchiometrischem Überschuß gegenüber den Isocyanatgruppen vorliegen.

Zur Herstellung der NCO-Prepolymeren a) geeignete Isocyanatocarbonsäurechloride der bereits obengenannten allgemeinen Formel sind beispielsweise 3-Isocyanatopropionsäurechlorid, 4-Isocyanatobuttersäurechlorid, 6-Isocyanatocapronsäurechlorid, 11-Isocyanatoundecansäurechlorid oder 4-Isocyanatocyclohexancarbonsäurechlorid.

Neben diesen bevorzugten Isocyanatocarbonsäurechloriden können auch solche der genannten allgemeinen Formel verwendet werden, in welcher B für einen gegebenenfalls weiter substituierten aromatischen Kohlenwasserstoffrest steht. Als Beispiel für derartige, allerdings weniger bevorzugte Verbindungen, sei 4-Isocyanatobenzoesäurechlorid genannt.

Die erfindungsgemäß als Komponente a) eingesetzten NCO-Prepolymeren zeichnen sich durch Monomerenfreiheit und ungewöhnlich niedrige Viskositäten aus.

Die Reaktivkomponente b) besteht aus mindestens einer Verbindung mit mindestens zwei gegenüber Isocyanatgruppen reaktionsfähigen Gruppen oder mindestens zwei hydrolytisch in derartige Gruppen überführbare Gruppen. Ebenfalls möglich, jedoch weniger bevorzugt, ist die Verwendung von solchen Verbindungen, die sowohl freie als auch derartige reversibel blockierte, gegenüber Isocyanatgruppen reaktionsfähige Gruppen aufweisen. Weiterhin möglich, jedoch ebenfalls weniger bevorzugt, ist die Verwendung von unterschiedlichen derartigen Verbindungen, auch von solchen Gemischen, die sowohl Verbindungen mit freien als auch Verbindungen mit reversibel blockierten, gegenüber Isocyanatgruppen reaktionsfähige Gruppen aufweisen. Vorzugsweise weisen die Verbindungen der Komponente b) pro Molekül 2 bis 4 freie oder blockierte, gegenüber Isocyanatgruppen reaktionsfähige Gruppen auf. Das Molekulargewicht der die Komponente b) darstellenden Verbindungen ist nicht kritisch. Vorzugsweise werden jedoch vergleichsweise niedermolekulare Verbindungen, d.h., solche mit einem maximalen Molekulargewicht von 600 eingesetzt.

Die Menge der Komponente b) wird im übrigen so bemessen, daß in den erfindungsgemäßen Bindemitteln das Verhältnis von (i) Isocyanatgruppen der Komponente a) zu (ii) freien und/oder reversibel blockierten, gegenüber Isocyanatgruppen reaktionsfähigen Gruppen bei 0,8:1 bis 10:1, vorzugsweise 0,9:1 bis 4:1, insbesondere 1:1 bis 2:1 und, besonders bevorzugt 1:1 bis 1,2:1, liegt.

Als Komponente b) oder als Teil der Komponente b) kommen beispielsweise in Betracht:
- Polyoxazolidine der aus der Polyurethanchemie an sich bekannten Art, wie sie z.B. in DE-PS 2 018 233 (= US-PS 3 743 626) oder DE-OS 2 446 438 (= US-PS 4 002 601) beschrieben sind;
- Polyketimine oder Polyaldimine der aus der Polyurethanchemie an sich bekannten Art, wie sie beispielsweise in DE-OS 1 520 139 (= US-PS 3 420 800) bzw. US-PS 3 567 692) oder DE-OS 3 308 418 (= US-PS 4 481 345) beschrieben sind;
- aromatische Polyamine, insbesondere Diamine mit sterisch gehinderten Aminogruppen, wie sie beispielsweise gemäß US-PS 4 218 543 als Kettenverlängerungsmittel eingesetzt werden, besonders bevorzugt das 1-Methyl-3,5-diethyl-2,4-diaminobenzol bzw. dessen technischen Gemische mit 1-Methyl-3,5-diethyl-2,6-diaminobenzol oder
- mehrwertige Alkohole des Molekulargewichtsbereichs 62 bis 399 oder auch eines Molekulargewichts von mindestens 400. Geeignete niedermolekulare Alkohole sind beispielsweise Ethylenglykol, Propylenglykol, Butandiol-1,4, Glycerin, Trimethylolpropan, Pentaerythrit, Diethylenglykol, Dipropylenglykol oder Gemische derartiger Polyole. Geeignete höhermolekulare Alkohole sind beispielsweise die oben beispielhaft genannten Ausgangsmateria-

lien A(OH)$_n$ für die Herstellung der Polyisocyanat-Komponente a). Ferner geeignet sind auch andere Polyhydroxylverbindungen wie beispielsweise Epoxidharze, Phenolharze, Alkydharze, Rizinusöl, Hydroxylgruppen aufweisende Polyesterharze oder Hydroxylgruppen aufweisende Silikonharze.

Zur Herstellung der erfindungsgemäßen Zweikomponenten-Bindemittel werden die Einzelkomponenten a) und b) miteinander vermischt. Im Falle der Verwendung von Verbindungen b) mit reversibel blockierten, gegenüber Isocyanatgruppen reaktionsfähigen Gruppen, insbesondere mit reversibel blockierten Aminogruppen entstehen hierbei lagerstabile Zubereitungen, die in Abwesenheit von Feuchtigkeit lagerstabil sind und nach Applikation auf ein geeignetes Substrat in Gegenwart von Feuchtigkeit schnell aushärten. Erforderlichenfalls kann die Härtungsreaktion auch durch Zugabe von an sich bekannten Katalysatoren wie beispielsweise p-Toluolsulfonsäure, Dibutylzinnoctoat oder Zinkchlorid beschleunigt werden.

Im Falle der Verwendung von Reaktivkomponenten b), die freie, gegenüber Isocyanatgruppen reaktionsfähige Gruppen, d.h., insbesondere Amino- oder Hydroxylgruppen aufweisen, entstehen Reaktionsgemische, die bereits bei Raumtemperatur zu Polyurethanen bzw. Polyharnstoffen ausreagieren, d.h., die nur eine begrenzte Topfzeit aufweisen und innerhalb dieser Topfzeit verarbeitet werden müssen.

Im übrigen ist der hier verwendete Begriff "Zweikomponenten-Bindemittel" dahingehend zu verstehen, daß die erfindungsgemäßen Bindemittel aus den Einzelkomponenten a) und b) bestehen, wobei die Einzelkomponenten im Falle der Verwendung von blockierten Reaktivkomponenten b) auch zu einem "Eintopf-System" vereinigt werden können.

Vor, während oder nach der Herstellung der Bindemittel durch Vermischen der Einzelkomponenten a) und b) können den einzelnen Komponenten bzw. den erfindungsgemäßen Kombinationen inerte organische Lösungsmittel oder Weichmacher zugegeben werden.

Insbesondere bei Verwendung von Polyoxazolidinen, Polyketiminen oder Polyaldiminen als Komponente b) sollten diese Lösungsmittel oder Weichmacher weitgehend wasserfrei sein, um eine ausreichende Lagerstabilität der Bindemittel zu gewährleisten. Entsprechend der Aufgabenstellung, möglichst lösungsmittelarme Bindemittel zur Verfügung zu stellen, ist die Verwendung von Lösungsmitteln oder Weichmachern jedoch weniger bevorzugt.

Der für die meisten Anwendungen erforderliche Zusatz von Pigmenten und anderen Hilfs- und Zusatzmitteln wie Füllstoffen, Verlaufshilfsmitteln usw. wird vorzugsweise so vorgenommen, daß diese Zusatzmittel vor Herstellung der erfindungsgemäßen Bindemittel in eine der Ausgangskomponenten eingemischt werden.

Die erfindungsgemäßen Bindemittel eignen sich insbesondere zur Herstellung von Beschichtungs- und Dichtungsmassen. Die erfindungsgemäße Bindemittel enthaltenden Beschichtungsmassen können nach an sich bekannten Methoden, wie beispielsweise durch Spritzen, Streichen, Tauchen, Fluten oder mit Hilfe von Walzen oder Rakeln auf beliebige Substrate ein- oder mehrschichtig aufgetragen werden. Als Substrate eignen sich beispielsweise Metall, Holz, Glas, Stein, keramische Materialien, Beton, harte und flexible Kunststoffe, Textilien, Leder oder Papier.

Die Substrate können selbstverständlich vor der Applikation der, erfindungsgemäße Bindemittel enthaltenden Beschichtungsmittel mit den üblichen Grundierungen versehen sein.

Die nachfolgenden Beispiele dienen zur weiteren Erläuterung der Erfindung. Prozentangaben beziehen sich, wenn nicht anders angegeben, auf Gewichtsprozente. Angaben in "Teilen" beziehen sich auf Gewichtsteile.

## Beispiele

### Allgemeine Herstellungsvorschrift der O-silylierten Polyhydroxylverbindungen

Die bei der Herstellung der NCO-Prepolymeren I bis III eingesetzten O-silylierten Polyhydroxylverbindungen wurden aus den entsprechenden Polyhydroxylverbindungen durch Umsetzung mit Hexamethyldisilazan hergestellt:

1 OH-Äquivalent der Hydroxylverbindung und 0,8 Mol Hexamethyldisilazan werden unter Zusatz von 0,5 g Trimethylchlorsilan bei 100 bis 120°C bis zum Ende der NH$_3$-Entwicklung gerührt. Die Reaktion wird IR-spektroskopisch anhand der Abnahme der OH-Bande verfolgt. Nach beendeter Reaktion wird überschüssiges Disilazan destillativ aus dem Reaktionsgemisch entfernt.

### NCO-Prepolymer I

1073 g eines gemäß obiger Vorschrift hergestellten o-silylierten Polyethers aus Trimethylolpropan und Propylenoxid (OH-Zahl = 56, Viskosität bei 22°C = 500 mPas) und 175,5 g 6-Isocyanatocapronsäurechlorid werden unter Zusatz von 1 ml Pyridin bei 80 bis 100°C gerührt, bis das IR-Spektrum keine Säurechloridbande mehr zeigt. Während der Umsetzung wird entstehendes Trimethylchlorsilan laufend abdestilliert. Nach Dünnschichtdestillation bei 140°C/0,05 mbar erhält man ein NCO-Prepolymer mit folgenden Kenndaten: NCO-Gehalt 3,45 %; Viskosität bei 22°C = 600 mPas.

NCO-Prepolymer II

1073 g eines gemäß obiger Vorschrift hergestellten O-silylierten Polyestercarbonatdiols (zugrundeliegendes Polyestercarbonatdiol: hergestellt gemäß DE-AS 1 770 245 aus Hexandiol-1,6, Caprolacton und Diphenylcarbonat im Molverhältnis von ca. 8:8:7, OH-Zahl = 56, Viskosität bei 22°C = 20.000 mPas) wird wie oben bei der Herstellung von NCO-Prepolymer I beschrieben mit 175,5 g 6-Isocyanatocapronsäurechlorid umgesetzt. Das erhaltene NCO-Prepolymer besitzt nach Entfernung von Resten flüchtiger Bestandteile durch Dünnschichtdestillation folgende Kenndaten: NCO-GEhalt = 3,2 %, Viskosität bei 22°C = 20.000 mPas.

NCO-Prepolymer III

1673 g eines gemäß obiger Vorschrift hergestellten O-silylierten Polyethertriols (zugrundeliegendes Polyethertriol: OH-Zahl = 35, Viskosität bei 22°C = 500 mPas, hergestellt durch Propoxylierung von Trimethylolpropan und anschließende Ethoxylierung des Propoxylierungsprodukts unter Einhaltung eines PO:EO-Gewichtsverhältnisses von 86,5:13,5) wird wie oben beschrieben mit 175,5 g 6-Isocyanatocapronsäurechlorid umgesetzt. Das erhaltene NCO-Prepolymer besitzt nach Dünnschichtdestillation bei 140°C/0,05 mbar folgende Kenndaten: NCO-Gehalt = 2,46 %, Viskosität bei 22°C = 600 mPas.

NCO-Prepolymer IV

Man tropft ein Gemisch aus 1000 g des Polyestercarbonatdiols, welches bereits bei der Herstellung von NCO-Prepolymer II eingesetzt worden war, 500 ml Ethylacetat und 102 g Triethylamin zu einer Lösung von 175,5 g Isocyanatocapronsäurechlorid in 300 ml Ethylacetat bei Raumtemperatur langsam zu, so daß die Temperatur nicht über 30°C ansteigt. Man läßt über Nacht nachrühren und filtriert dann vom ausgefallenen Ammoniumsalz ab. Das Filtrat wird durch Dünnschichtverdampfung von flüchtigen Bestandteilen getrennt. Das erhaltene NCO-Prepolymer besitzt folgende Kenndaten: NCO-Gehalt = 3,16 %, Viskosität bei 22°C = 80.000 mPas.

Beispiel 1

88 Teile des NCO-Prepolymers I werden mit 12 Teilen eines Bisoxazolidins, hergestellt aus 2 Mol 2-(2-Isopropyl-1,3-oxazolidin-3-yl)ethanol und 1 Mol Hexamethylendiisocyanat vermischt. Die Mischung ist im geschlossenen Gebinde vollkommen stabil. Die so hergestellte lösungsmittelfreie Mischung besitzt eine Viskosität von 800 mPas (22°C). An der Luft bei Raumtemperatur härtet die Masse z.B. in 8 mm dicken Schichten zu einem elastischen Kunststoff.

Beispiel 2

93 Teile des NCO-Prepolymers I werden mit 7 Teilen 1-Methyl-3,5-diethyl-phenylendiamin-(2,4) gut vermischt.

Die Mischung besitzt eine Topfzeit von 15 Min. Ein bei Raumtemperatur aufgebrachter Lackfilm ist nach ca. 40 Min. drucktrocken. Nach Alterung besitzt der Film eine Härte von 66° Shore A.

Beispiel 3

89 Teile des NCO-Prepolymers II werden mit 11 Teilen des in Beispiel 1 beschriebenen Bisoxazolidins innig vermischt. Man erhält eine lösungsmittelfreie Mischung, die im geschlossenen Gebinde vollkommen lagerstabil ist und eine Viskosität von 17.000 mPas (22°C) besitzt. An der Luft bei Raumtemperatur härtet die Mischung zu zähelastischen Filmen, die eine hervorragende Abriebbeständigkeit besitzen.

Beispiel 4

187 Teile des NCO-Prepolymers II werden mit 13 Teilen 1-Methyl-3,5-diethyl-phenylendiamin-(2,4) gut vermischt. Die lösungsmittelfreie Mischung besitzt eine Anfangsviskosität von 20.000 mPas (22°C) und eine Topfzeit von 15 Min. Ein bei Raumtemperatur aufgebrachter Film ist nach ca. 40 Min. drucktrocken. Nach Alterung entsteht ein zähelastischer Film mit einer guten Abriebfestigkeit.

Beispiel 5

95 Teile des NCO-Prepolymers III werden mit 5 Teilen 1-Methyl-3,5-diethylphenylendiamin-(2,4) innig vermischt.

Die lösungsmittelfreie Mischung besitzt eine Anfangsviskosität von 650 mPas (22°C), die Topfzeit beträgt 20 Min. Ein bei Raumtemperatur aufgebrachter Lackfilm ist nach ca. 90 Min. drucktrocken. Nach Alterung erhält man einen hochelastischen Film.

## Beispiel 6

91 Teile des NCO-Prepolymers II werden mit 9 Teilen eines Bisketimins, hergestellt durch Kondensation von Isophorondiamin mit Methyl-isobutylketon vermischt. Man erhält eine lagerstabile Mischung mit einer Viskosität von 18.000 mPas (22°C). Ein bei Raumtemperatur aufgebrachter Film besitzt eine gute Abriebfestigkeit.

## Beispiel 7

195 Teile des NCO-Prepolymers II werden mit 5 Teilen Glycerin vermischte. Die Mischung besitzt eine Anfangsviskosität von 20.000 mPas (22°C). Zur beschleunigten Aushärtung erhitzt man eine Probe für 70 Min. auf 100°C. Dabei erhält man ein zähelastisches Polymer mit guten mechanischen Eigenschaften.

## Beispiel 8

94 Teile des NCO-Prepolymers IV werden mit 6 Teilen 1-Methyl-3,5-diethyl-phenyldiamin-(2,4) vermischt. Die lösungsmittelfreie Mischung besitzt eine Anfangsviskosität von 80.000 mPas (22°C) und eine Topfzeit von 20 Min. Ein bei Raumtemperatur aufgebrachter Film ist nach ca. 60 Min. drucktrocken. Nach Alterung entsteht ein zähelastischer Film mit guter Abriebfestigkeit.

## Beispiel 9 (Vergleich)

1000 g des bei der Herstellung des NCO-Prepolymers II eingesetzten Polyestercarbonatdiols und 222 g Isophorondiisocyanat werden bei 100°C bis zur Konstanz des NCO-Gehaltes prepolymerisiert. Das erhaltene Prepolymer besitzt folgende Kenndaten: NCO-Gehalt = 3,35 %, Viskosität bei 22°C = 400.000 mPas, Monomerengehalt = 2,5 %.

Zur Verarbeitung muß das Prepolymer auf einen Festkörpergehalt von 80 % mit Butylacetat verdünnt werden: NCO-Gehalt = 2,68 %, Viskosität bei 22°C = 12.000 mPas.

189 Teile des lösemittelhaltigen Prepolymers werden mit 11 Teilen 1-Methyl-3,5-diethyl-phenyldiamin-(2,4) vermischt. Die Mischung besitzt eine Anfangsviskosität von 13.000 mPas (22°C) und eine Topfzeit von 15 Min. Ein bei Raumtemperatur aufgebrachter Film ist nach ca. 60 Min. drucktrocken.

## Ansprüche

1. Zweikomponenten-Bindemittel für Beschichtungs- und Dichtmassen bestehend aus
a) einer Polyisocyanat-Komponente und
b) einer Reaktivkomponente, bestehend aus mindestens einer Verbindung mit mindestens zwei, gegebenenfalls reversibel blockierten, gegenüber Isocyanatgruppen reaktionsfähigen Gruppen in, einem Äquivalentverhältnis von Isocyanatgruppen zu freien und blockierten, gegenüber Isocyanatgruppen reaktionsfähigen Gruppen von 0,8:1 bis 10:1 entsprechenden Mengen, dadurch gekennzeichnet, daß die Polyisocyanat-Komponente a) im wesentlichen aus Verbindungen der allgemeinen Formel

$$A\text{---}[O\text{-}CO\text{-}B\text{-}NCO]_n$$

besteht, wobei
n für eine ganze Zahl gleich oder größer als 2 steht,
A für einen n-wertigen organischen Rest steht, wie er durch Entfernung der Hydroxylgruppen aus einer n-wertigen organischen Polyhydroxylverbindung des Molekulargewichtsbereichs 400 bis 20.000, die, von den Hydroxylgruppen abgesehen, bei Raumtemperatur gegenüber Isocyanatgruppen inert ist, erhalten wird, und
B für einen aliphatischen, cycloaliphatischen oder aromatischen Kohlenwasserstoffrest steht, der gegebenenfalls gegenüber den in den Bindemitteln vorliegenden reaktiven Gruppen inerte Substituenten aufweist.

2. Zweikomponenten-Bindemittel gemäß Anspruch 1, dadurch gekennzeichnet, daß die Polyisocyanat-Komponente a) aus solchen Verbindungen der genannten allgemeinen Formel besteht, für welche
n für eine ganze Zahl von 2 bis 8 steht,
A für einen n-wertigen Rest steht, wie er durch Entfernung der Hydroxylgruppen aus einer n-wertigen, Ether-, Ester-, Carbonat- und/oder Urethangruppen aufweisenden Polyhydroxylverbindung des Molekulargewichtsbereichs 800 bis 5.000 erhalten wird, und
B für einen aliphatischen Kohlenwasserstoffrest mit 2 bis 10 Kohlenstoffatomen oder einen cycloaliphatischen Kohlenwasserstoffrest mit 6 Kohlenstoffatomen steht.

3. Zweikomponenten-Bindemittel gemäß Anspruch 1, dadurch gekennzeichnet, daß die die Polyisocyanat-Komponente a) darstellenden Verbindungen durch Umsetzung von O-silylierten, mehrwertigen Alkoholen der allgemeinen Formel

$$A\text{---}[O\text{-}SiR_3]_n$$

mit Isocyanatocarbonsäurechloriden der allgemeinen Formel

Cl-CO-B-NCO

unter Abspaltung von Chlorsilanen der allgemeinen Formel

Cl-SiR$_3$

erhalten worden sind, wobei

n, A und B die in Anspruch 1 genannte Bedeutung haben und

R für einen Alkylrest mit 1 bis 4 Kohlenstoffatomen oder einen Phenylrest steht.

4. Zweikomponenten-Bindemittel gemäß Anspruch 1 bis 3, dadurch gekennzeichnet, daß die Komponente b) aus Polyaminen mit reversibel blockierten Aminogruppen, ausgewählt aus der Gruppe bestehend aus Polyoxazolidinen, Polyketiminen, Polyaldiminen und Gemischen derartiger Verbindungen, besteht

5. Zweikomponenten-Bindemittel gemäß Anspruch 1 bis 3, dadurch gekennzeichnet, daß die Komponente b) aus Verbindungen mit gegenüber Isocyanatgruppen reaktionsfähigen Gruppen, ausgewählt aus der Gruppe bestehend aus aromatischen Polyaminen, mehrwertigen Alkoholen und Gemischen derartiger Verbindungen, besteht.

6. Verwendung der Zweikomponenten-Bindemittel gemäß Anspruch 1 bis 5, gegebenenfalls in Kombination mit in der Lacktechnologie üblichen Hilfs- und Zusatzmitteln, zur Herstellung von Beschichtungen und Abdichtungen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 263 481 (BAYER) <br> * Ansprüche 1,2; Seite 2, Zeilen 35-42; Seite 3, Zeilen 9-15; Seite 4, Zeilen 9-19 * <br> --- | 1-6 | C 08 G 18/77 <br> C 08 G 18/71 <br> C 09 D 175/04 <br> C 09 K 3/10 |
| Y | FR-A-2 134 463 (BAYER) <br> * Ansprüche 1-3; Seite 3, Zeile 3 - Seite 6, Zeile 4; Seite 7, Zeilen 9-23 * & DE-A-2 120 090 (Kat. D) <br> --- | 1-6 | |
| A | EP-A-0 265 668 (BAYER) <br> * Ansprüche 1,3; Seite 3, Zeilen 28-45 * <br> ----- | 1 | |

**RECHERCHIERTE SACHGEBIETE (Int. Cl.5)**

C 08 G

Der vorliegende Recherchenbericht wurde für alle Patentansprüche erstellt

| Recherchenort | Abschlußdatum der Recherche | Prüfer |
|---|---|---|
| DEN HAAG | 10-08-1990 | VAN PUYMBROECK M.A. |